# EUROPEAN PATENT APPLICATION

(11) **EP 4 647 829 A1**
(43) Date of publication of application: **12.11.2025**
(21) Application number: 23918966.5
(22) Date of filing: 30.01.2023
(51) Int. Cl.: G02B 27/01

(54) **PROJECTION APPARATUS, DISPLAY DEVICE, VEHICLE, AND PROJECTION METHOD**

(71) Applicant: Shenzhen Yinwang Intelligent Technologies Co., Ltd., Shenzhen, Guangdong 518110 (CN)
(72) Inventor: ZHAO, Dongfeng, Shenzhen, Guangdong 518129 (CN); ZHOU, Pengcheng, Shenzhen, Guangdong 518129 (CN); CHEN, Xingyu, Shenzhen, Guangdong 518129 (CN); ZHANG, Hu, Shenzhen, Guangdong 518129 (CN); TONG, Kainian, Shenzhen, Guangdong 518129 (CN)
(74) Representative: Thun, Clemens
(86) International application number: PCT/CN2023/073891
(87) International publication number: WO 2024/159376

(57) **Abstract**

A projection apparatus, a display device, a transportation means, and a projection method are provided. An optical element is disposed in the projection apparatus (100). A picture generation unit (110) in the optical element emits a polarized light beam to a reflective polarizer (120), and the polarized light beam passes through the reflective polarizer (120), where the reflective polarizer (120) selectively transmits light in different polarization states. The polarized light beam passing through the reflective polarizer (120) is transmitted through a first polarization converter (140) to change a polarization state, is transmitted through the first polarization converter (140) after being reflected by a curved mirror (130) to change the polarization state through the first polarization converter (140), and passes through the reflective polarizer (120) again, where the polarized light beam passing through the reflective polarizer (120) twice has different polarization states. The optical element in the projection apparatus (100) may selectively process the polarized light beam, and space may be reused by an optical path, so that an inner structure of the projection apparatus (100) is compact, and a volume of the projection apparatus (100) is effectively controlled.

## Description

### TECHNICAL FIELD

This application relates to projection imaging technologies, is applied to the field of augmented reality technologies of intelligent vehicles, and in particular, relates to a projection apparatus, a display device, a transportation means, and a projection method.

### BACKGROUND

With development of the intelligent vehicle market, an intelligent optical display like an augmented reality head-up display (Augmented Reality Head-up Display, AR-HUD) increasingly becomes a core component. The AR-HUD integrates a holographic augmented reality (Augmented Reality, AR) technology and a head-up display (Head-up Display, HUD) function. Obtained image information is superimposed in a real three-dimensional environment ahead of a traveling route through computing processing, so that information such as a distance, a speed, and navigation can be integrated into a real image obtained by a driver. Computing data is combined with a display scenario, so that digital information is richer and more intuitive. This improves driving experience and safety. The AR-HUD technology is gradually used in vehicles such as large-sized, medium-sized, and small-sized passenger vehicles, business vehicles, and engineering vehicles widely to comprehensively improve performance and experience of intelligent cockpits.

Currently, a free-form surface solution is adopted for mass production of on-board AR-HUD. To be specific, after a picture generation unit (Picture generation unit, PGU) generates a real-focus image, the real-focus image is enlarged by two or three free-form surfaces to form a virtual image of more than 100 times. In the AR-HUD technology, a field of view (Field of view, FOV) and a virtual image distance (Virtual Image Distance, VID) are important parameters that affect an imaging effect of the AR-HUD display technology. A larger FOV and a longer VID indicate a higher degree of combination between the digital information and the display scenario, and better experience of the driver.

As requirements for the FOV and the VID are increasing, a volume of an AR-HUD device increases. For example, for an AU-HUD device with an FOV of 15×5 square degrees and a VID of 7.5 meters, a volume may be approximately 15 liters; and for an AU-HUD device with an FOV of 20×8 square degrees and a VID of 20 meters, a volume is increased to approximately 25 liters. Because internal accommodating space of the vehicle for devices is limited, and currently, the AR-HUD device is mostly disposed in a center console on a front side of a steering wheel, an increase in the volume of the AR-HUD device inevitably leads to an increase in a volume of the center console, and consequently on-board use of a solution of a large field of view and a long virtual image distance is affected. Therefore, miniaturization of the AR-HUD device becomes a breakthrough for resolving contradiction between experience enhancement of the technology and on-board requirements.

### SUMMARY

Embodiments of this application disclose a projection apparatus, a transportation means, a display device, and a projection method. Embodiments of this application provides a polarization component for changing a polarization state of a light beam, so that a volume of the projection apparatus can be correspondingly decreased when a field of view and a virtual image distance of the projection apparatus are increased.

According to a first aspect, an embodiment of this application discloses a projection apparatus, including a picture generation unit, a reflective polarizer, a first curved mirror, and a first polarization converter, where the picture generation unit is configured to emit a polarized light beam; the first polarization converter is located between the reflective polarizer and the first curved mirror, and is configured to: transmit the polarized light beam and change a polarization state of the polarized light beam; the first curved mirror is configured to reflect the polarized light beam; and after being emitted by the picture generation unit, the polarized light beam is propagated to the first polarization converter via the reflective polarizer, transmitted through the first polarization converter for propagation to the first curved mirror, propagated to the first polarization converter via the first curved mirror, and transmitted through the first polarization converter for propagation to the reflective polarizer. The picture generation unit is disposed to emit a polarized light beam. The polarized light beam is selectively transmitted and reflected, based on different responses of the reflective polarizer, the first polarization converter, and the curved mirror to a polarization state of the polarized light beam, by the reflective polarizer while being transmitted back and forth between the reflective polarizer and the curved mirror. The reflective polarizer does not need to avoid the light beam that is transmitted back and forth, so a volume of the projection apparatus is correspondingly reduced. When a FOV and a VID of the projection apparatus are increased, the projection apparatus is effectively controlled to have a small increase in volume, remain unchanged in volume, or be decreased in volume.

With reference to the first aspect, in a possible implementation of the first aspect, the reflective polarizer is configured to: transmit a polarized light beam whose polarization state is a first state and reflect a polarized light beam whose polarization state is a second state; and the polarization state includes linearly polarized light and circularly polarized light, the polarized light beam in the first state includes first-state linearly polarized light and first-state circularly polarized light, and the polarized light beam in the second state includes second-state linearly polarized light and second-state circularly polarized light. Based on selective transmittance of the reflective polarizer for polarized light beams in different states, the reflective polarizer does not need to avoid a light beam that is transmitted back and forth, and a volume of the projection apparatus is correspondingly reduced.

With reference to the first aspect, in a possible implementation of the first aspect, the first curved mirror includes a first curved reflector, the picture generation unit is located on a side that is of the reflective polarizer and that is close to the first curved reflector, and the picture generation unit emits a polarized light beam, where a polarization state of the polarized light beam is the second-state linearly polarized light; and the polarized light beam is reflected by the reflective polarizer and is propagated to the first polarization converter, the polarized light beam is transmitted through the first polarization converter to convert the polarization state of the polarized light beam into the second-state circularly polarized light and is transmitted through the first polarization converter for propagation to the first curved reflector, the polarized light beam is reflected by the first curved reflector to convert the polarization state of the polarized light beam into the first-state circularly polarized light and is propagated to the first polarization converter, and the polarized light beam is transmitted through the first polarization converter to convert the polarization state of the polarized light beam into the first-state linearly polarized light, is transmitted through the first polarization converter for propagation to the reflective polarizer, and is transmitted through the reflective polarizer. Corresponding parameters of the reflective polarizer, the curved mirror, and the first polarization converter are set, so that the light beam may be first reflected by the reflective polarizer, and the reflected light beam changes the polarization state through the curved mirror and the first polarization converter, and then is transmitted through the reflective polarizer. In this way, the reflective polarizer and the picture generation unit can be arranged vertically in a center console, to reduce a transverse size of the projection apparatus.

With reference to the first aspect, in a possible implementation of the first aspect, the first polarization converter includes a quarter wave plate.

With reference to the first aspect, in a possible implementation of the first aspect, the first curved mirror includes a first curved reflector, the picture generation unit is located on a side that is of the reflective polarizer and that is close to the first curved reflector, and the picture generation unit emits a polarized light beam, where a polarization state of the polarized light beam is the second-state linearly polarized light; and the polarized light beam is transmitted through the first polarization converter to convert the polarization state of the polarized light beam into the second-state circularly polarized light, is reflected by the reflective polarizer to convert the polarization state of the polarized light beam into the first-state circularly polarized light, and is propagated to the first polarization converter, the polarized light beam is transmitted through the first polarization converter to convert the polarization state of the polarized light beam into the first-state linearly polarized light and is propagated to the first curved reflector, the polarized light beam is reflected by the first curved reflector, the polarized light beam that is reflected by the first curved reflector is propagated to the first polarization converter, and the polarized light beam is transmitted through the first polarization converter to convert the polarization state of the polarized light beam into the first-state circularly polarized light, is transmitted through the first polarization converter for propagation to the reflective polarizer, and is transmitted through the reflective polarizer. Corresponding parameters of the reflective polarizer, the curved mirror, and the first polarization converter are set, so that the reflective polarizer can reflect the second-state circularly polarized light, and transmit the first-state circularly polarized light, and the projection apparatus can choose to transmit polarized light in more states.

With reference to the first aspect, in a possible implementation of the first aspect, the first curved mirror includes a free-form transflective mirror, the picture generation unit is located on a side that is of the free-form transflective mirror and that is away from the reflective polarizer, and the picture generation unit emits a polarized light beam, where a polarization state of the polarized light beam is the second-state linearly polarized light; and the polarized light beam is transmitted through the free-form transflective mirror, the polarized light beam that is transmitted through the free-form transflective mirror is transmitted through the first polarization converter to convert the polarization state of the polarized light beam into the second-state circularly polarized light, is reflected by the reflective polarizer to convert the polarization state of the polarized light beam into the first-state circularly polarized light, and is propagated to the first polarization converter, the polarized light beam is transmitted through the first polarization converter to convert the polarization state of the polarized light beam into the first-state linearly polarized light and is propagated to the free-form transflective mirror, the polarized light beam is reflected by the free-form transflective mirror, the polarized light beam that is reflected by the free-form transflective mirror is propagated to the first polarization converter, and the polarized light beam is transmitted through the first polarization converter to convert the polarization state of the polarized light beam into the first-state circularly polarized light, is transmitted through the first polarization converter for propagation to the reflective polarizer, and is transmitted through the reflective polarizer. The curved mirror includes the free-form transflective mirror, and the curved mirror also has selective transmission for a light beam with a polarization state. The curved mirror may be disposed to not avoid an incident light beam, so that a volume of the projection apparatus is further reduced.

With reference to the first aspect, in a possible implementation of the first aspect, the first curved mirror includes a first curved reflector, the picture generation unit is located on a side that is of the reflective polarizer and that is away from the first curved reflector, and the picture generation unit emits a polarized light beam, where a polarization state of the polarized light beam is the second-state linearly polarized light; and the polarized light beam is transmitted through the reflective polarizer, the polarized light beam that is transmitted through the reflective polarizer is propagated to the first polarization converter, the polarized light beam is transmitted through the first polarization converter to convert the polarization state of the polarized light beam into the second-state circularly polarized light and is transmitted through the first polarization converter for propagation to the first curved reflector, the polarized light beam is reflected by the first curved reflector to convert the polarization state of the polarized light beam into the first-state circularly polarized light and is propagated to the first polarization converter, the polarized light beam is transmitted through the first polarization converter to convert the polarization state of the polarized light beam into the first-state linearly polarized light and is transmitted through the first polarization converter for propagation to the reflective polarizer, and the polarized light beam is reflected out of the projection apparatus through the reflective polarizer. The light beam is first transmitted through the reflective polarizer, the polarization state of the transmitted light beam is changed through the curved mirror and the first polarization converter, and then the light beam is reflected out of the projection apparatus through the reflective polarizer. The reflective polarizer does not need to avoid a retro-reflected light beam, so that a volume of the projection apparatus is effectively reduced.

With reference to the first aspect, in a possible implementation of the first aspect, the projection apparatus further includes a second polarization converter, the second polarization converter is located on a side that is of the reflective polarizer and that is away from the first curved reflector, and the second polarization converter is configured to convert the polarized light beam emitted by the reflective polarizer from the circularly polarized light to the linearly polarized light. In this way, the projection apparatus emits linearly polarized light, and a polarization type of the linearly polarized light is consistent with a polarization type of an incident light beam emitted by the picture generation unit in the projection apparatus.

With reference to the first aspect, in a possible implementation of the first aspect, the second polarization converter includes a quarter wave plate or a half wave plate.

With reference to the first aspect, in a possible implementation of the first aspect, the first polarization converter includes a quarter wave plate or a half wave plate.

With reference to the first aspect, in a possible implementation of the first aspect, the reflective polarizer includes a polarizing element, and the polarizing element includes at least one of a liquid crystal polarizer or a reflective polarizing film. Circularly polarized light in different states may be selectively transmitted by the liquid crystal polarizer through voltage control of a liquid crystal material and liquid crystal rotation.

With reference to the first aspect, in a possible implementation of the first aspect, the reflective polarizer further includes a substrate layer, and the polarizing element is attached to the substrate layer to carry the reflective polarizer in the projection apparatus, avoiding image shake due to vibration of the reflective polarizer.

With reference to the first aspect, in a possible implementation of the first aspect, the projection apparatus further includes a lens element, the lens element is located at a light beam emergent end of the projection apparatus, and the lens element is configured to adjust an optical path of an emergent light beam. The lens element may perform optical adjustment on a light beam emitted by the projection apparatus, to improve optical quality of an entire architecture of the projection apparatus, and reduce difficulty in designing and processing a free-form surface in the curved mirror. In addition, in a production process of an existing projection apparatus, each module is produced in a standardized manner, and processing parameters of the lens element may be designed to meet different optical requirements of different vehicle models, and the like, so as to meet a plurality of performances of the projection apparatus. This reduces overall development difficulty and costs of the projection apparatus.

An optical design in the projection apparatus is determined or optimized based on a performance indicator, material selection, testability acceptance, tolerance control, processing and assembly, costs, and the like. These factors need to be considered throughout a process from a start of a product design to an end of product generation, and a device commissioning process in product application. In the entire process, especially for a head-up display apparatus, a design parameter of a free-form mirror has a large impact on imaging quality of an entire product, and a parameter design and product production of the free-form mirror have a high requirement on a process. According to the embodiment of this application, in a case of a same indicator achieved by the free-form mirror, adding the lens element means to increase an optimization dimension of the optical design. Imaging of the projection apparatus can be optimized by adjusting a parameter design of the lens element, and a requirement on the indicator of the free-form surface is reduced. In addition, changing the lens element can meet a specific performance indicator requirement of the projection apparatus, so that the free-form surface does not need to be changed, and difficulty and complexity of optical system optimization are reduced.

With reference to the first aspect, in a possible implementation of the first aspect, the projection apparatus further includes a diffuser, the diffuser is located on a light emitting side of the picture generation unit, and the diffuser is configured to implement a projection image plane of the picture generation unit. The diffuser can receive a real image of the picture generation unit, and perform light homogenizing and optical extension angle control on the image, to provide a display object surface for a polarization and folding component in the projection apparatus.

With reference to the first aspect, in a possible implementation of the first aspect, the projection apparatus further includes an anti-glare film, and the anti-glare film is configured to process the polarized light beam to mitigate or prevent glare. The anti-glare film can change a symmetry center of light reflection. When external sunlight enters the projection apparatus through a windshield, light reflected by the anti-glare film deviates from a visible range of eyes of a driver, for example, deviates from the eyes of the driver to the top, and does not enter the eyes of the driver, to avoid dizziness of the driver.

According to a second aspect, an embodiment of this application provides a display device, including an imaging screen and the projection apparatus according to any one of the foregoing implementations. The imaging screen is configured to receive an emergent light beam emitted by the projection apparatus and perform imaging.

With reference to the second aspect, in a possible implementation of the second aspect, the display device includes holographic glasses and/or a helmet.

According to a third aspect, an embodiment of this application discloses a transportation means, including a windshield and the projection apparatus or the display device according to any one of the foregoing implementations. The transportation means includes a projection medium, and the projection medium is configured to: receive an emergent light beam emitted by the projection apparatus and perform imaging.

According to a fourth aspect, an embodiment of this application discloses a projection method, applied to a projection apparatus. The projection apparatus includes a picture generation unit, a reflective polarizer, a first curved mirror, and a first polarization converter. The method includes:

The picture generation unit emits a polarized light beam, and the polarized light beam is propagated to the first polarization converter via the reflective polarizer, transmitted through the first polarization converter for propagation to the first curved mirror, propagated to the first polarization converter via the first curved mirror, transmitted through the first polarization converter for propagation to the reflective polarizer, and projected out of the projection apparatus through the reflective polarizer.

It should be noted that some possible implementations of the second aspect, the third aspect, and the fourth aspect of this application have a same concept as some implementations of the first aspect. For beneficial effects brought by the implementations, refer to the beneficial effects of the first aspect. Therefore, details are not described again.

### BRIEF DESCRIPTION OF DRAWINGS

The following describes accompanying drawings used in embodiments of this application.
FIG. 1 is a diagram of a field of view;
FIG. 2 is a diagram of a virtual image distance;
FIG. 3 is a diagram of an application scenario of a projection apparatus in the field of vehicles according to an embodiment of this application;
FIG. 4 is a diagram of an application scenario of a projection apparatus in the field of vehicles from another perspective according to an embodiment of this application;
FIG. 5 is a diagram of imaging in which a projection apparatus projects an image into a driver's eye in the field of vehicles according to an embodiment of this application;
FIG. 6 is a diagram of an optical path of a projection apparatus applied to the field of vehicles according to an embodiment of this application;
FIG. 7 is a diagram of light beam transmission of a projection apparatus applied to the head-up display field according to an embodiment of this application;
FIG. 8 is a diagram of a change of a polarization state of a light beam of a projection apparatus according to an embodiment of this application;
FIG. 9 is diagram of another light beam transmission of a projection apparatus applied to the head-up display field according to an embodiment of this application;
FIG. 10 is a diagram of another change of a polarization state of a light beam of a projection apparatus according to an embodiment of this application;
FIG. 11 is diagram of another light beam transmission of a projection apparatus applied to the head-up display field according to an embodiment of this application;
FIG. 12 is a diagram of another change of a polarization state of a light beam of a projection apparatus according to an embodiment of this application;
FIG. 13 is diagram of another light beam transmission of a projection apparatus applied to the head-up display field according to an embodiment of this application;
FIG. 14 is a diagram of another change of a polarization state of a light beam of a projection apparatus according to an embodiment of this application;
FIG. 15 is a diagram of disposing a lens element in a projection apparatus according to an embodiment of this application;
FIG. 16 is a diagram of disposing a diffuser in a projection apparatus according to an embodiment of this application;
FIG. 17 is a diagram of disposing an anti-glare film in a projection apparatus according to an embodiment of this application;
FIG. 18 is a diagram of disposing a processor in a projection apparatus according to an embodiment of this application;
FIG. 19 is a diagram of two curved mirrors in a projection apparatus according to an embodiment of this application; and
FIG. 20 is a diagram of a structure of a computing device according to an embodiment of this application.

### DESCRIPTION OF EMBODIMENTS

The following describes embodiments of this application with reference to the accompanying drawings in embodiments of this application. It should be noted that in embodiments of this application, terms such as "example" or "for example" are used to represent giving an example, an illustration, or a description. Any embodiment or design solution described as an "example" or "for example" in embodiments of this application should not be explained as being more preferred or having more advantages than another embodiment or design scheme. To be precise, use of the word such as "example" or "for example" is intended to present a relative concept in a specific manner.

The term "include" used in embodiments of this application should not be construed as being limited to content listed below, and does not exclude other elements. Accordingly, it should be interpreted as specifying the presence of the feature, entire, or component mentioned, but does not preclude the presence or addition of one or more other features, wholes, or components and groups thereof.

In embodiments of this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects. For example, a first beam splitting apparatus and a second beam splitting apparatus are merely intended to distinguish between different beam splitting apparatuses, but do not indicate different structures, detection principles, importance degrees, and the like of the two apparatuses.

References to "one embodiment" or "an embodiment" in this specification mean that particular features, structures, or characteristics described in conjunction with the embodiment are included in at least one embodiment of the present invention. Therefore, the expression "in one embodiment" or "in an embodiment" appearing throughout this specification does not necessarily indicate a same embodiment, but may indicate a same embodiment. Further, in one or more embodiments, the particular features, structures, or characteristics can be combined in any suitable manner, as will be apparent to those of ordinary skill in the art from the present disclosure.

For ease of understanding, the following first explains some terms in embodiments of this application.

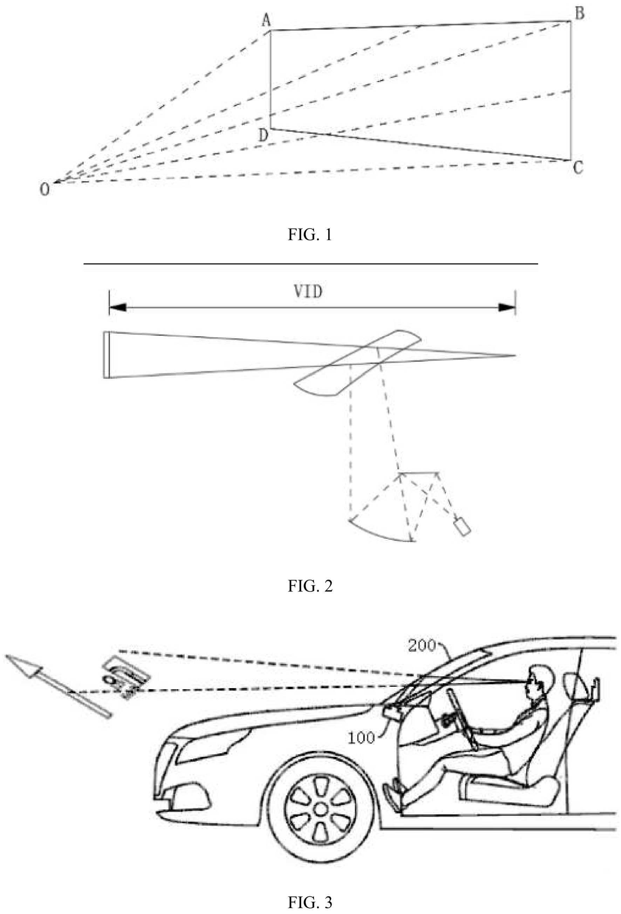

A field of view (Field of view, FOV) is also referred to as an angle of view, and is a maximum three-dimensional included angle from an edge of a displayed image to an image obtaining center. For example, in an optical measurement device, a center of a lens of the optical measurement device is used as an image obtaining center, and a target object image measured by the optical measurement device can pass through the lens. In addition, an included angle formed by two edges of a maximum range that is presented through the lens is referred to as a field of view. In addition, in a projection device, an included angle between two side edges, that are usually two edge points with a greatest distance, of an image projected by the projection device on an imaging mechanism and a center point of a lens of the projection device is a field of view that is usually. In the head-up display field, the image obtaining center is a pupil of a human body. In the projection field, the FOV generally includes a vertical field of view, a horizontal field of view, and a diagonal field of view. As shown in FIG. 1, a point O in FIG. 1 is an image obtaining center, a quadrilateral enclosed by ABCD is a projected image, an included angle between an OA connection line and an OB connection line may be a horizontal field of view, an included angle between an OB connection line and an OC connection line may be a vertical field of view, and an included angle between the OA connection line and the OC connection line may be a diagonal field of view. Unless otherwise specified, a default field of view generally comprises the horizontal field of view and the vertical field of view.

A virtual image distance (Virtual Image Distance, VID) refers to a distance from a projected virtual image to the image obtaining center. In the head-up display field, the image obtaining center is a pupil of a human body. As shown in FIG. 2, in a head-up display system, the virtual image distance is a straight-line distance from the pupil of the human body to the virtual image.

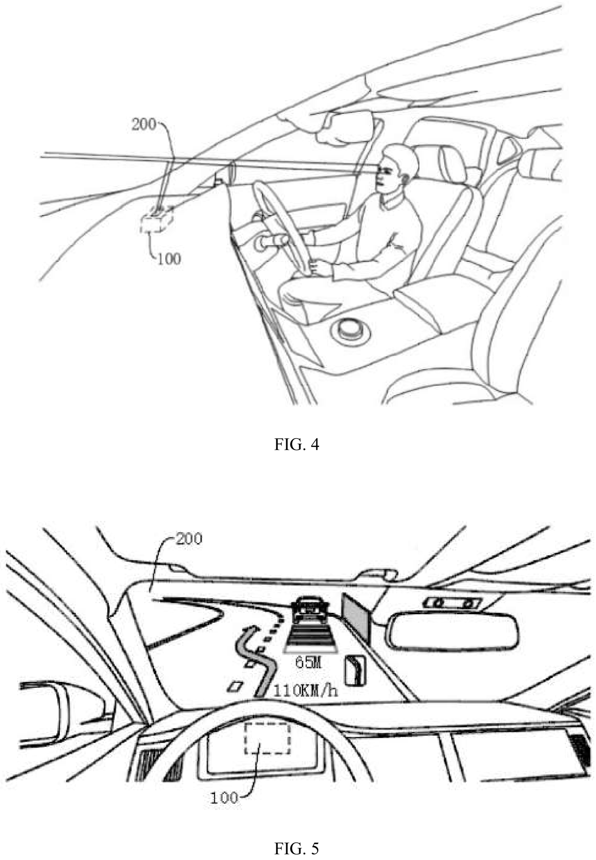

FIG. 3 is a diagram of an application scenario of a projection apparatus 100 in the field of vehicles according to an embodiment of this application. FIG. 4 is a diagram of an application scenario of the projection apparatus 100 in the field of vehicles from another perspective according to an embodiment of this application. FIG. 5 is a diagram of imaging in which the projection apparatus 100 projects an image into eyes of a driver in the field of vehicles according to an embodiment of this application, and shows virtual image information that can be seen by the driver when the projection apparatus 100 in FIG. 3 and FIG. 4 projects the image into the eyes of the driver. When looking out of a vehicle through a windshield 200, the driver can see a virtual image with a specific depth of field (namely, a distance at which a clear image is presented in a range before and after an image focus). Information about the front of the vehicle is obtained through an information obtaining module like a camera and an infrared sensor. Information about a road ahead includes a distance to a vehicle ahead, a speed of the vehicle ahead, road information, and the like, and corresponding digital information is projected through imaging to be closely combined with environment information of the vehicle ahead. The digital information includes a vehicle speed, navigation information (road indication), a vehicle gear, cruise control, a distance to a vehicle ahead, a speed of the vehicle ahead, rotation speed information, state of charge information, endurance range information, audio-visual entertainment system information, and the like. In this way, when driving a vehicle 1, the driver can learn of information required for driving the vehicle 1 without diverting a line of sight. This avoids a driving risk that may be caused because the driver cannot consider a road condition when driving the vehicle 1, for example, looking down to view information on a dashboard or a central control screen. To implement the foregoing projection, the vehicle needs to have a head-up display (Head-up Display, HUD) system. An augmented head-up display system may include a projection apparatus 100 and an optical element. The projection apparatus 100 may project an image, and the optical element may include a windshield 200 of the vehicle, or a reflective film attached to the windshield 200, or a screen separately disposed in a vehicle cockpit. The optical element may reflect and/or refract the image projected by the projection apparatus 100, and then project the image into the eyes of the driver, so that the driver can obtain a virtual information image in front of the windshield 200.

In the head-up display field, a field of view may be 15×5 square degrees. 15 degrees is a horizontal field of view of 15 degrees, and as shown in FIG. 1, may be the included angle between the OA connection line and the OB connection line. 5 degrees is a vertical field of view, and may be the included angle between the OB connection line and the OC connection line. Generally, a size of a retina of a person is limited. Usually, an FOV of both eyes of the person is between 90 degrees and 120 degrees (which may be a horizontal field of view or a vertical field of view), and a 3D state of an object can be perceived through human eyes based on parallax of both eyes. Corresponding to an increase in the FOV, the projection apparatus can improve a fitting degree between a virtual image and a real image can be improved, a coverage area of the virtual image can be increased, and a visual effect of the driver can also be correspondingly improved.

In the head-up display field, the VID may be 7.5 meters. As shown in FIG. 2, the VID may be a distance among a front side of the vehicle and the eyes of the driver. Increasing a corresponding VID of the projection apparatus allows for an increase in a depth of the virtual image relative to a field of view of the driver, so that a degree of fitting between the virtual image and a distant real image is higher, and a stereoscopic effect of the virtual image is more realistic. In addition, when the VID is increased, the driver does not need to frequently change a focal length when viewing displayed image information and virtual image information, thereby improving eye comfort of the driver, and also correspondingly improving driving safety.

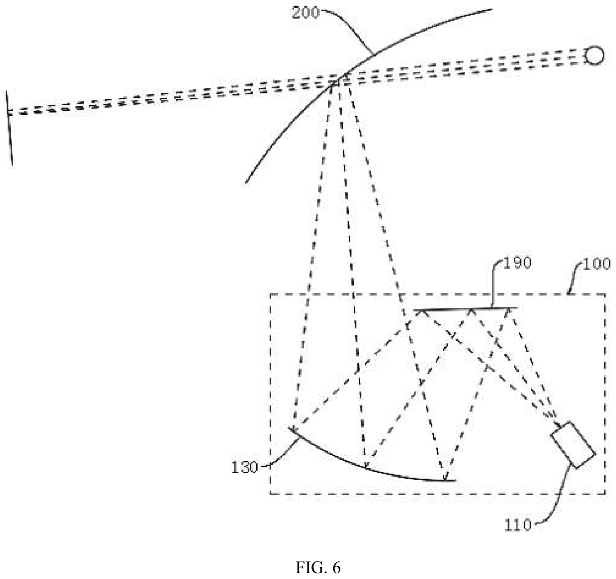

FIG. 6 is a diagram of an optical path of the projection apparatus 100 applied to the field of vehicles. A picture generation unit 110 emits a light beam to a reflector 190. A cross-sectional area of the light beam emitted by the picture generation unit 110 gradually increases, and is reflected and enlarged by the reflector 190 to a first curved mirror 130. The first curved mirror 130 reflects the light beam to the windshield 200, and the light beam is reflected into the eyes of the driver through the windshield 200. The first curved mirror 130 selects a parameter based on factors such as an internal structure of the projection apparatus 100, an installation position, and a shape of a display area of the windshield, to correct and compensate for optical distortion caused by different curvatures and optical path lengths of different projection areas of the windshield.

If a FOV of the projection apparatus 100 is increased, an optical path transmission distance in the projection apparatus 100 needs to be increased to increase an enlargement coefficient, sizes of light beams reflected by the reflector 190 and the first curved mirror 130 are increased, and sizes of the reflector 190 and the first curved mirror 130 are correspondingly increased. If a VID of the projection apparatus 100 is increased while image quality is ensured, the optical path transmission distance in the projection apparatus 100 needs to be increased. Regardless of whether the FOV or the VID is increased, a volume of the projection apparatus 100 is increased. For example, for the projection apparatus 100 whose FOV is 15×5 square degrees and VID is 7.5 meters, a volume is mostly about 15 liters. For the projection apparatus 100 whose FOV is 20×8 square degrees and VID is 20 meters, a volume may reach 25 liters, and the volume is nearly doubled.

In the field of vehicles, the projection apparatus 100 for implementing an augmented head-up display function is mostly disposed at a center console of a vehicle. As shown in FIG. 3 and FIG. 4, the projection apparatus 100 may be disposed in the center console, and is located on a front side of a steering wheel (corresponding to the front of a traveling direction of the vehicle). There are a large quantity of components in the center console, and an overall size of the center console is limited. Therefore, the projection apparatus 100 with a large volume is not suitable for being disposed in the center console. Due to a volume limitation, a FOV and a VID in the current head-up display field cannot reach a large range, affecting imaging quality.

It should be noted that, in embodiments of this application, an example in which a vehicle is an automobile is used for description, and this should not be considered as a limitation on embodiments of this application. The vehicle may be a conventional fuel vehicle, or may be a new energy vehicle, for example, a pure electric vehicle or a hybrid vehicle. The vehicle may be any one of different types of vehicles such as a car, a truck, a passenger bus, and a sport utility vehicle (Sport Utility Vehicle, SUV), or may be a land transportation apparatus for carrying people or goods, for example, a tricycle, a motorcycle, or a train. Alternatively, the projection apparatus in embodiments of this application may be further used in another type of transportation means like an airplane or a ship.

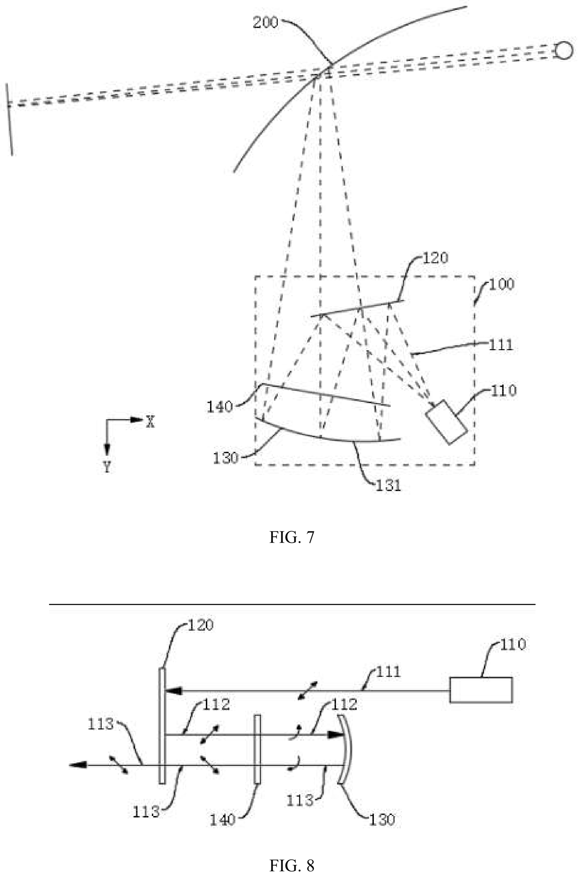

To resolve a problem that the volume of the projection apparatus 100 is increased and it is difficult to load the projection apparatus 100 in the vehicle due to an increase of the FOV and the VID, an embodiment of this application provides a projection apparatus. As shown in FIG. 7 and FIG. 8, the projection apparatus 100 includes a picture generation unit 110, a reflective polarizer 120, a first curved mirror 130, and a first polarization converter 140. The first curved mirror 130 may be a spherical mirror, or an aspherical mirror, or a free-form mirror. The first curved mirror 130 has a reflection function, and can reflect all polarized light beams, or can reflect some polarized light beams. In this implementation, for example, the first curved mirror 130 is a free-form mirror.

The picture generation unit 110 emits a light beam to the reflective polarizer 120, where the light beam is a polarized light beam. The polarized light beam includes a plurality of states, for example, linearly polarized light and circularly polarized light.

The linearly polarized light means that a light vector vibrates only in a fixed direction, and in a propagation direction of light, vibration of the light vector is on a plane. The linearly polarized light has different polarization forms, for example, first-state linearly polarized light and second-state linearly polarized light. Vibration directions of the first-state linearly polarized light and the second-state linearly polarized light are different. For example, the first-state linearly polarized light may be P-linearly polarized light, the second-state linearly polarized light may be S-linearly polarized light, and a vibration direction of the P-linearly polarized light is perpendicular to a vibration direction of the S-linearly polarized light. It may be understood that this implementation is merely intended to distinguish between different forms of linearly polarized light, and "first" and "second" do not constitute a limitation on a form of the linearly polarized light. The first-state linearly polarized light may alternatively be S-linearly polarized light, and the second-state linearly polarized light may alternatively be P-linearly polarized light.

The circularly polarized light is light whose electrical vector depicts a circular track in a light beam transmission direction. The circularly polarized light has different polarization forms, for example, first-state circularly polarized light and second-state circularly polarized light. Rotation directions of the first-state circularly polarized light and the second-state circularly polarized light are different. For example, the first-state circularly polarized light may be right-handed circularly polarized light, and the second-state circularly polarized light may be left-handed circularly polarized light. In a light direction, circularly polarized light whose electrical vector rotates clockwise is called right-handed circularly polarized light, and circularly polarized light whose electrical vector rotates counterclockwise is called left-handed circularly polarized light. It may be understood that this implementation is merely intended to distinguish between different forms of circularly polarized light, and "first" and "second" do not constitute a limitation on a form of the circularly polarized light. The first-state circularly polarized light may alternatively be left-handed circularly polarized light, and the second-state circularly polarized light may alternatively be right-handed circularly polarized light.

The light beam emitted by the picture generation unit 110 is transmitted back and forth between the reflective polarizer 120 and the first curved mirror 130, the first polarization converter 140 is located between the reflective polarizer 120 and the first curved mirror 130, and the light beam that is transmitted back and forth between the reflective polarizer 120 and the first curved mirror 130 may be transmitted through the first polarization converter 140. The first polarization converter 140 may convert a polarization state of the transmitted light beam, for example, convert the linearly polarized light into the circularly polarized light, or convert the circularly polarized light into the linearly polarized light.

The picture generation unit 110 is a real picture generation unit and mainly includes a micro display (LCoS, DLP, LBS, Micro LED, and the like), an illumination light source and system (the illumination light source may be an LED or a laser, or may be a combination thereof), an imaging lens unit, and the like.

The reflective polarizer 120 is a polarization device with polarization state based selective transmittance. The reflective polarizer 120 may transmit first-state polarized light, and reflect second-state polarized light. For example, a polarization direction of the reflective polarizer 120 is consistent with a vibration direction of the P-linearly polarized light. When the light beam emitted by the picture generation unit 110 is the S-linearly polarized light, the S-linearly polarized light is reflected by the reflective polarizer 120, and the reflected S-linearly polarized light is converted by the first polarization converter 140 into the circularly polarized light. The first curved mirror 130 may reflect the circularly polarized light and change a rotation direction of the circularly polarized light. When passing through the first polarization converter 140 again, the light beam may be converted into the P-linearly polarized light. In this case, the P-linearly polarized light may be transmitted through the reflective polarizer 120, and is transmitted to the outside of the projection apparatus 100 through the reflective polarizer 120.

Alternatively, a polarization direction of the reflective polarizer 120 is consistent with a vibration direction of the S-linearly polarized light. When the light beam emitted by the picture generation unit 110 is the S-linearly polarized light, the S-linearly polarized light is transmitted through the reflective polarizer 120, and the transmitted S-linearly polarized light is converted by the first polarization converter 140 into the circularly polarized light. The first curved mirror 130 may reflect the circularly polarized light and change a rotation direction of the circularly polarized light. When passing through the first polarization converter 140 again, the light beam may be converted into the P-linearly polarized light. In this case, the P-linearly polarized light is reflected by the reflective polarizer 120, and is reflected and transmitted to the outside of the projection apparatus 100. In this embodiment, increasing the FOV and the VID based on polarization state based selective transmission of the reflective polarizer 120, and controlling an increase in an overall volume of the projection apparatus 100 are only described in the two manners. There is no limitation on implementation of this application in only the foregoing two manners. Other implementations are described below.

The reflective polarizer 120 described in embodiments of this application includes a polarizing element. The polarizing element may be a reflective polarizing film. The reflective polarizing film has polarization state based selective transmission, and the first polarization converter 140 changes a state of polarized light emitted by the picture generation unit 110. When a light beam incident to the first curved mirror 130 is the circularly polarized light, the first curved mirror 130 may also change a polarization form of the circularly polarized light. When a state and a form of polarized light between the reflective polarizer 120 and the first curved mirror 130 are converted by using a combination of the first polarization converter 140 and the first curved mirror 130 to transmit the light beam to the reflective polarizer 120 in different polarization states, the first-state polarized light can be transmitted through the reflective polarizer 120, and the second-state polarized light is reflected by the reflective polarizer 120. When an optical path of the projection apparatus 100 is designed, the reflective polarizer 120 does not need to avoid a light beam that is transmitted back and forth, and the light beam that is transmitted back and forth is a light beam between the reflective polarizer 120 and the first curved mirror 130.

When the FOV and the VID of the projection apparatus 100 are increased, areas of the reflective polarizer 120 and the first curved mirror 130 are correspondingly increased, and a light beam transmission distance (a spacing between the picture generation unit 110, the reflective polarizer 120, and the first curved mirror 130 is increased) is also correspondingly increased. The reflective polarizer 120 does not need to avoid a light beam that is transmitted back and forth, to balance a volume increase of the projection apparatus 100 caused by an area increase of the reflective polarizer 120 and the first curved mirror 130, and a volume increase of the projection apparatus 100 caused by an increase in the light beam transmission distance. In this way, the projection apparatus 100 has a small increase in volume, remains unchanged in volume, or is decreased in volume.

In a possible implementation, refer to FIG. 7 and FIG. 8. FIG. 7 is a diagram of light beam transmission of the projection apparatus 100 applied to the head-up display field in this implementation. FIG. 8 is a diagram of a change of a light beam polarization state of the projection apparatus 100 in this implementation.

The picture generation unit 110 is located below the reflective polarizer 120. The below refers to a corresponding direction when the vehicle is in a normal traveling state. The projection apparatus 100 is integrally located in the center console, and the center console is located below the windshield 200. The below in FIG. 7 is a Y direction, and corresponds to the below in a vehicle traveling state. A right side in FIG. 7 is an X direction, and corresponds to a rear side in the vehicle traveling state. As shown in FIG. 7, the picture generation unit 110 is located in the Y direction of the reflective polarizer 120 and shifts in the X direction, and the picture generation unit 110 emits an incident light beam 111 toward the reflective polarizer 120. The incident light beam 111 is a light beam that is emitted by the picture generation unit 110 and that is in contact with the reflective polarizer 120 for the first time, and the incident light beam 111 is second-state linearly polarized light.

In this implementation, as shown in FIG. 8, for example, the second-state linearly polarized light is S-linearly polarized light. In FIG. 8, a bidirectional arrow tilting from the upper right to the lower left indicates the S-linearly polarized light, and the incident light beam 111 in S-linear polarization is reflected by the reflective polarizer 120 to form a first retro-reflected light beam 112. The first retro-reflected light beam 112 is S-linearly polarized light, and is converted into second-state circularly polarized light after being transmitted through the first polarization converter 140. In this implementation, for example, the second-state circularly polarized light is left-handed circularly polarized light. In FIG. 8, an arc-shaped arrow in a counterclockwise direction indicates the left-handed circularly polarized light, and the first retro-reflected light beam 112 in a left-handed circularly polarized state is reflected by the first curved reflector 131 to form a second retro-reflected light beam 113.

As shown in FIG. 7, some light beams processed by an optical element may pass through the reflective polarizer 120 again, and some light beams do not pass through the reflective polarizer 120. As shown in FIG. 8, all of the processed light beams may also pass through the reflective polarizer 120 again. A quantity of the processed light beams passing through the reflective polarizer is not limited in this application.

In this implementation, the first curved mirror 130 includes a first curved reflector 131. In this embodiment, a free-form reflector is used as an example to correct an aberration caused by an irregular curved surface of the windshield. A surface of an optical element used in a conventional optical design is a standard spherical surface. Usually, a plurality of spherical mirrors need to cooperate to correct an aberration. Consequently, an optical structure of the optical element is complex, and large space is occupied. As the optical industry develops, design and manufacturing technologies of complex aspherical surfaces are greatly improved. Aspherical surfaces are usually quadratic surfaces such as a parabolic surface, an ellipsoidal surface, an involute surface, and a hyperbolic surface with a rotating axis, high-order surfaces, and non-rotating aspherical surfaces such as an off-axis aspherical surface. In different use scenarios, one aspherical surface may usually replace two or more spherical surfaces to correct an aberration, to simplify the optical structure and implement miniaturization and lightweight of an optical path.

Compared with the aspherical surface, a free-form surface is a more complex optical structure. A curvature radius of each point on the surface is different, and a degree of freedom of the surface is very high. The free-form surface can not only replace a plurality of aspherical surfaces to correct an aberration, but also maximally improve optical quality and simplify the optical structure. An optical free-form surface has a complex structure, a high degree of freedom, and no clear expression definition. Generally, an optical surface that does not have global rotational symmetry, does not have a unified optical axis, and has a plurality of curvature radii on the entire surface is considered as an optical free-form surface.

The second retro-reflected light beam 113 reflected by the first curved reflector 131 is converted into right-handed circularly polarized light. In FIG. 8, an arc-shaped arrow in a clockwise direction indicates the right-handed circularly polarized light, and the right-handed circularly polarized light is converted into P-linearly polarized light after being transmitted through the first polarization converter 140. In FIG. 8, a bi-directional arrow tilting from the upper left to the lower right indicates the P-linearly polarized light. The second retro-reflected light beam 113 in P-linear polarization may be transmitted through the reflective polarizer 120, and is imaged in the eyes of the driver after being reflected by the windshield 200.

As shown in FIG. 7 and FIG. 6, in this implementation, the picture generation unit 110 is disposed to emit a polarized light beam, and the light beam is selectively transmitted and reflected, based on different responses of the reflective polarizer 120, the first polarization converter 140, and the first curved reflector 131 to a polarization state of the light beam, by the reflective polarizer 120 while being transmitted back and forth between the reflective polarizer 120 and the first curved reflector 131. The reflective polarizer 120 does not need to avoid the light beam that is transmitted back and forth, and a volume of the projection apparatus 100 is correspondingly reduced. When the FOV and the VID of the projection apparatus 100 are increased, the projection apparatus 100 is effectively controlled to have a small increase in volume, remain unchanged in volume, or be decreased in volume.

It may be understood that the second-state linearly polarized light in this implementation may alternatively be P-linearly polarized light, and the incident light beam 111 in P-linear polarization is reflected by the reflective polarizer 120 to form the first retro-reflected light beam 112. The first retro-reflected light beam 112 is P-linearly polarized light, and is converted into second-state circularly polarized light after being transmitted through the first polarization converter 140. The second-state circularly polarized light may be right-handed circularly polarized light, and the first retro-reflected light beam 112 in a right-handed circular polarization state is reflected by the first curved reflector 131 to form the second retro-reflected light beam 113.

The second retro-reflected light beam 113 reflected by the first curved reflector 131 is converted into left-handed circularly polarized light, the left-handed circularly polarized light is converted into S-linearly polarized light after being transmitted through the first polarization converter 140, and the second retro-reflected light beam 113 in S-linear polarization may be transmitted through the reflective polarizer 120, and is imaged in the eyes of the driver after being reflected by the windshield 200.

In this implementation, the reflective polarizer 120 may be a reflective polarizing film having a polarization characteristic, and may use two materials with different refractive indexes to form a multi-layer film, for example, a dual brightness enhancement film (Dual Brightness Enhancement Film, DBEF). The multi-layer film may be specifically a reflective polarizing brightness enhancement film, and includes a plurality of layers, for example, a diffusion layer, a plurality of layers of reflective polarizing films, and a diffusion layer that are sequentially stacked. Specifically, the reflective polarizing film may be separately attached to a substrate layer, and the substrate layer may be a polycarbonate (Polycarbonate, PC) or glass substrate. Corresponding parameters such as a size of the first polarization converter 140 and a spacing between the reflective polarizing film and the first polarization converter 140 may be designed based on an optical system architecture of the projection apparatus 100, to ensure that all light beams pass through different apertures. This ensures that the entire size of the first polarization converter 140 is effectively utilized. In addition, a spacing between the reflective polarizer 120 and the first curved reflector 131 is also designed based on the optical system architecture of the projection apparatus 100.

The first polarization converter 140 may be a quarter wave plate (Quarter Wave Plate, QWP), or may be a half wave plate (Half Wave Plate, HWP). The wave plate is a parallel planar sheet made of a crystal, may be a wafer cut in a direction parallel to an optical axis of a birefringent crystal such as a crystal or calcite, or is made of a material such as a mica disc, cellophane, or polyvinyl alcohol that has a propagation direction for incident light. Specifically, the wave plate may be attached to a reflection surface of the first curved reflector 131, or may be separately attached to a polycarbonate (Polycarbonate, PC) or glass substrate.

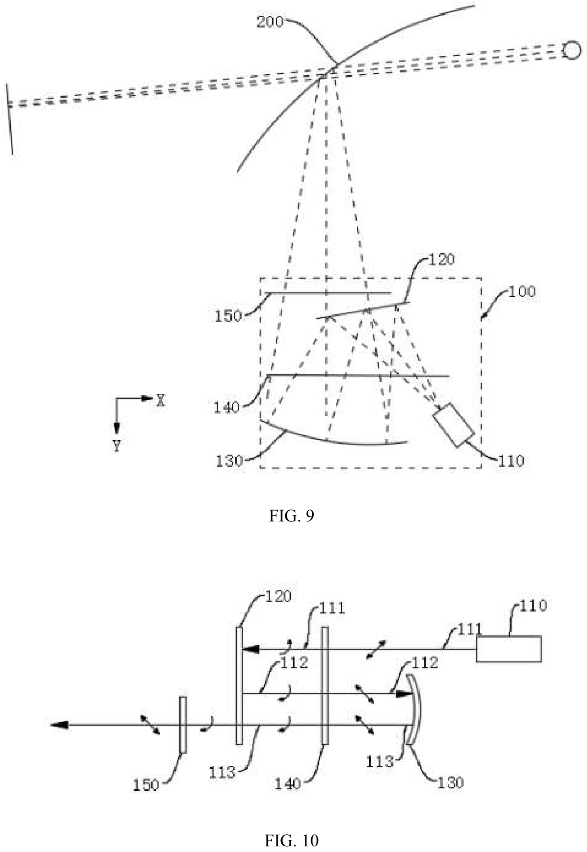

In a possible implementation, as shown in FIG. 9 and FIG. 10, FIG. 9 is a diagram of another light beam transmission of the projection apparatus 100 applied to the head-up display field in this implementation, and FIG. 10 is a diagram of another change of a polarization state of a light beam of the projection apparatus 100 in this implementation.

The picture generation unit 110 is located below the reflective polarizer 120. The below refers to a corresponding direction when the vehicle is in a normal traveling state. The projection apparatus 100 is integrally located in the center console, and the center console is located below the windshield. The below in FIG. 9 is a Y direction, and corresponds to the below in a vehicle traveling state. A right side in FIG. 9 is an X direction, and corresponds to a rear side in the vehicle traveling state. As shown in FIG. 9, the picture generation unit 110 is located in the Y direction of the reflective polarizer 120 and shifts in the X direction, and the picture generation unit 110 emits an incident light beam 111 toward the reflective polarizer 120. The incident light beam 111 is a light beam that is emitted by the picture generation unit 110 and that is in contact with the reflective polarizer 120 for the first time.

In this implementation, as shown in FIG. 10, for example, the second-state polarized light is left-handed circularly polarized light. The picture generation unit 110 emits an incident light beam 111 in an S-linear polarization state. In FIG. 10, a bidirectional arrow tilting from the upper right to the lower left indicates S-linearly polarized light. The incident light beam 111 in S-linear polarization is first transmitted through the first polarization converter 140 and is converted into left-handed circularly polarized light. In FIG. 10, an arc-shaped arrow in a counterclockwise direction indicates the left-handed circularly polarized light. The left-handed circularly polarized light is the second-state polarized light in this implementation, and the left-handed circularly polarized light is converted into right-handed circularly polarized light after being reflected by the reflective polarizer 120. In FIG. 10, an arc-shaped arrow in a clockwise direction indicates the right-handed circularly polarized light, forming the first retro-reflected light beam 112. The first retro-reflected light beam 112 is the right-handed circularly polarized light, and is converted into first-state linearly polarized light after being transmitted through the first polarization converter 140. In this implementation, for example, the first-state circularly polarized light is P-linearly polarized light. In FIG. 10, a bidirectional arrow tilting from the upper left to the lower right indicates P-linearly polarized light, and the first retro-reflected light beam 112 in a P-linear polarization state is reflected by the first curved reflector 131 to form the second retro-reflected light beam 113.

In this implementation, the first curved mirror 130 includes a first curved reflector 131. In this embodiment, a free-form reflector is used as an example to correct an aberration caused by an irregular curved surface of the windshield.

The second retro-reflected light beam 113 reflected by the first curved reflector 131 is in the P-linear polarization state, and the second retro-reflected light beam 113 in the P-linear polarization state is converted into first-state polarized light after being transmitted through the first polarization converter 140. The right-handed circularly polarized light is the first-state polarized light described in this implementation. The right-handed circularly polarized light may be transmitted through the reflective polarizer 120, and is imaged in the eyes of the driver after being reflected by the windshield 200.

It may be understood that, for example, the second-state polarized light in this implementation may alternatively be right-handed circularly polarized light. The picture generation unit 110 emits an incident light beam 111 in a P-linear polarization state, and P-linearly polarized light is converted into the second-state polarized light after being transmitted through the first polarization converter 140, for example, the second-state polarized light may be right-handed circularly polarized light, and the right-handed circularly polarized light is reflected by the reflective polarizer 120 to form the first retro-reflected light beam 112. The first retro-reflected light beam 112 is the left-handed circularly polarized light, and is converted into first-state linearly polarized light after being transmitted through the first polarization converter 140. The first-state linearly polarized light may be the P-linearly polarized light, and the first retro-reflected light beam 112 in a P-linear polarization state is reflected by the first curved reflector 131 to form the second retro-reflected light beam 113.

The second retro-reflected light beam 113 reflected by the first curved reflector 131 is in the P-linear polarization state, the P-linearly polarized light is converted into the right-handed circularly polarized light after being transmitted through the first polarization converter 140, and the second retro-reflected light beam 113 in a right-handed circularly polarized state may be transmitted through the reflective polarizer 120, and is imaged in the eyes of the driver after being reflected by the windshield 200.

In this implementation, the reflective polarizer 120 includes a polarizing element, and the polarizing element may be a liquid crystal polarizer with a polarization characteristic. The liquid crystal polarizer may implement liquid crystal deflection by controlling a voltage, to implement reflection of the left-handed circularly polarized light and transmission of the right-handed circularly polarized light, or implement reflection of the right-handed circularly polarized light and transmission of the left-handed circularly polarized light. The liquid crystal polarizer may be attached to a substrate layer, and the substrate layer may be a polycarbonate (Polycarbonate, PC) or glass substrate. Corresponding parameters such as a size of the first polarization converter 140 and a spacing between the liquid crystal polarizer and the first polarization converter 140 may be designed based on an optical system architecture of the projection apparatus 100, to ensure that all light beams pass through different apertures. This ensures that the entire size of the first polarization converter 140 is effectively utilized. In addition, a spacing between the reflective polarizer 120 and the first curved reflector 131 is also designed based on the optical system architecture of the projection apparatus 100.

The first polarization converter 140 may be a quarter wave plate (Quarter Wave Plate, QWP), or may be a half wave plate (Half Wave Plate, HWP). The wave plate is a parallel planar sheet made of a crystal, may be a wafer cut in a direction parallel to an optical axis of a birefringent crystal such as a crystal or calcite, or is made of a material such as a mica disc, cellophane, or polyvinyl alcohol that has a propagation direction for incident light. Specifically, the wave plate may be attached to a reflection surface of the first curved reflector 131, or may be separately attached to a polycarbonate (Polycarbonate, PC) or glass substrate.

It may be understood that the wave plate of the first polarization converter 140 may be an entirety, for example, an integral wave plate shown in FIG. 9 for transmission of the incident light beam 111, the first retro-reflected light beam 112, and the second retro-reflected light beam 113. Alternatively, the wave plate of the first polarization converter 140 may be two parts that are respectively disposed between the reflective polarizer 120 and the picture generation unit 110 to transmit the incident light beam 111, and disposed between the reflective polarizer 120 and the first curved reflector 131 to transmit the first retro-reflected light beam 112 and the second retro-reflected light beam 113.

In addition, in the projection apparatus 100 shown in FIG. 9, the projection apparatus 100 may further include a second polarization converter 150. The second polarization converter 150 is disposed on a side that is of the reflective polarizer 120 and that is away from the first curved reflector 131. In addition, the circularly polarized light that is transmitted through the reflective polarizer 120 may be transmitted through the second polarization converter 150, the second polarization converter 150 converts the circularly polarized light into linearly polarized light, and the linearly polarized light may be imaged in the eyes of the driver after being reflected by the windshield 200.

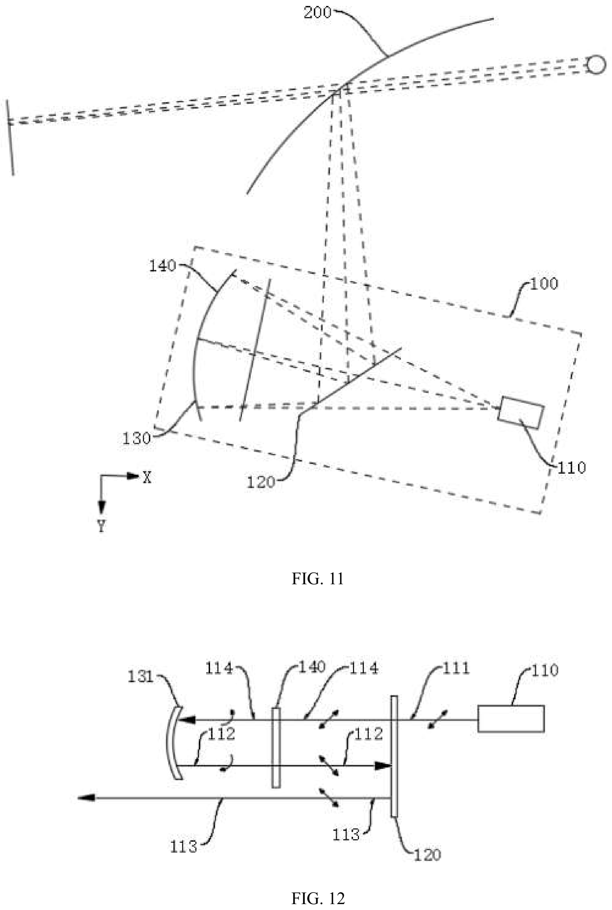

In a possible implementation, as shown in FIG. 11 and FIG. 12, FIG. 11 is a diagram of another light beam transmission of the projection apparatus 100 applied to the head-up display field in this implementation, and FIG. 12 is a diagram of another change of a polarization state of a light beam of the projection apparatus 100 in this implementation.

In comparison with the foregoing implementation, in this implementation, the incident light beam 111 may be first transmitted through the reflective polarizer 120, and the incident light beam 111 that is transmitted through the reflective polarizer 120 is transmitted back and forth between the reflective polarizer 120 and the first curved mirror 130, and is reflected out of the projection apparatus 100 through the reflective polarizer 120.

Specifically, as shown in FIG. 11 and FIG. 12, the picture generation unit 110 may be located on a right side of the reflective polarizer 120. The right side is a rear side direction of a traveling direction when the vehicle is in the normal traveling state. The entire projection apparatus 100 is located in the center console, and the center console is located below the windshield. The below in FIG. 11 is a Y direction, and corresponds to the below in the vehicle traveling state. A right side in FIG. 11 is an X direction, and corresponds to a rear side in the vehicle traveling state relative to the traveling direction. As shown in FIG. 11, the picture generation unit 110 is located in the X direction of the reflective polarizer 120 and shifts in the Y direction, and the picture generation unit 110 emits an incident light beam 111 toward the reflective polarizer 120. The incident light beam 111 is a light beam that is emitted by the picture generation unit 110 and that is in contact with the reflective polarizer 120 for the first time.

In this implementation, as shown in FIG. 12, for example, the first-state linearly polarized light is S-linearly polarized light. In FIG. 12, a bidirectional arrow tilting from the upper right to the lower left indicates S-linearly polarized light, and the picture generation unit 110 emits the S-linearly polarized light. The incident light beam 111 in an S-polarized state is transmitted through the reflective polarizer 120 to form a transmitted light beam 114. The transmitted light beam 114 is S-linearly polarized light, and is converted into first-state circularly polarized light after being transmitted through the first polarization converter 140. In this implementation, for example, the first-state circularly polarized light is left-handed circularly polarized light. In FIG. 12, an arc-shaped arrow in a counterclockwise direction indicates the left-handed circularly polarized light, and the transmitted light beam 114 in a left-handed circularly polarized state is reflected by the first curved reflector 131 to form the first retro-reflected light beam 112.

In this implementation, the first curved mirror 130 includes the first curved reflector 131. In this embodiment, a free-form reflector is used as an example to correct an aberration caused by an irregular curved surface of the windshield.

The first retro-reflected light beam 112 reflected by the first curved reflector 131 is converted into right-handed circularly polarized light. In FIG. 12, an arc-shaped arrow in a clockwise direction indicates the right-handed circularly polarized light, and the right-handed circularly polarized light is converted into P-linearly polarized light after being transmitted through the first polarization converter 140. In FIG. 12, a bi-directional arrow tilting from the upper left to the lower right indicates the P-linearly polarized light. The first retro-reflected light beam 112 in a P-linear polarization state is reflected by the reflective polarizer 120. The second-state linearly polarized light in this implementation may be P-linearly polarized light, forming the second retro-reflected light beam 113. In this implementation, to prevent the second retro-reflected light beam 113 from being reflected by the first curved reflector 131 again, the reflective polarizer 120 is obliquely disposed, and specifically, is obliquely disposed from the lower left to the upper right. In this way, the second retro-reflected light beam 113 can avoid the reflective polarizer 120 and the first polarization converter 140. The second retro-reflected light beam 113 in P-linear polarization is emitted out of the projection apparatus 100, and is imaged in the eyes of the driver after being reflected by the windshield 200.

It may be understood that the second-state linearly polarized light in this implementation may alternatively be S-linearly polarized light, the first-state linearly polarized light may alternatively be P-linearly polarized light, and the incident light beam 111 is in a P-linear polarization state. The incident light beam 111 is transmitted through the reflective polarizer 120 to form a transmitted light beam 114. The transmitted light beam 114 is P-linearly polarized light, and is converted into first-state circularly polarized light after being transmitted through the first polarization converter 140. The first-state circularly polarized light may be right-handed circularly polarized light, and the transmitted light beam 114 in a right-handed circular polarization state is reflected by the first curved reflector 131 to form the first retro-reflected light beam 112.

The first retro-reflected light beam 112 reflected by the first curved reflector 131 is converted into left-handed circularly polarized light, the left-handed circularly polarized light is converted into S-linearly polarized light after being transmitted through the first polarization converter 140, and the first retro-reflected light beam 112 in S-linear polarization is reflected by the reflective polarizer 120 to form the second retro-reflected light beam 113 in an S-linear polarization state. The second retro-reflected light beam 113 is emitted out of the projection apparatus 100, and is imaged in the eyes of the driver after being reflected by the windshield 200.

In this implementation, the reflective polarizer 120 may be a reflective polarizing film having a polarization characteristic, and may use two materials with different refractive indexes to form a multi-layer film, for example, a dual brightness enhancement film (Dual Brightness Enhancement Film, DBEF). The multi-layer film may be specifically a reflective polarizing brightness enhancement film, and includes a plurality of layers, for example, a diffusion layer, a plurality of layers of reflective polarizing films, and a diffusion layer that are sequentially stacked. Specifically, the reflective polarizing film may be separately attached to a substrate layer, and the substrate layer may be a polycarbonate (Polycarbonate, PC) or glass substrate. Corresponding parameters such as a size of the first polarization converter 140 and a spacing between the reflective polarizing film and the first polarization converter 140 may be designed based on an optical system architecture of the projection apparatus 100, to ensure that all light beams pass through different apertures. This ensures that the entire size of the first polarization converter 140 is effectively utilized. In addition, a spacing between the reflective polarizer 120 and the first curved reflector 131 is also designed based on the optical system architecture of the projection apparatus 100.

The first polarization converter 140 may be a quarter wave plate (Quarter Wave Plate, QWP), or may be a half wave plate (Half Wave Plate, HWP). The wave plate is a parallel planar sheet made of a crystal, may be a wafer cut in a direction parallel to an optical axis of a birefringent crystal such as a crystal or calcite, or is made of a material such as a mica disc, cellophane, or polyvinyl alcohol that has a propagation direction for incident light. Specifically, the wave plate may be attached to a reflection surface of the first curved reflector 131, or may be separately attached to a polycarbonate (Polycarbonate, PC) or glass substrate.

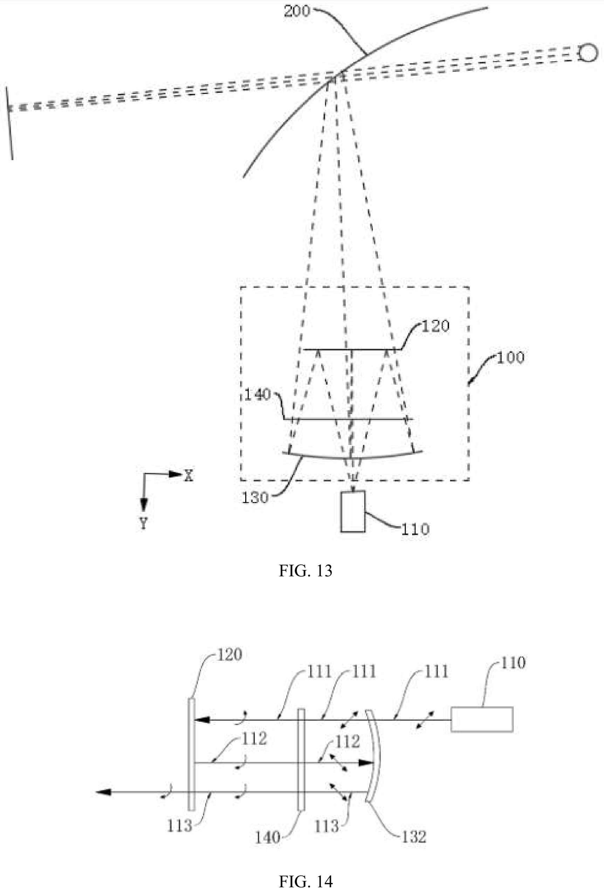

In a possible implementation, as shown in FIG. 13 and FIG. 14, FIG. 13 is a diagram of another light beam transmission of the projection apparatus 100 applied to the head-up display field in this implementation, and FIG. 14 is a diagram of another change of a polarization state of a light beam of the projection apparatus 100 in this implementation.

In comparison with the foregoing implementation, in this implementation, the incident light beam 111 may be first transmitted through the first curved mirror 130, and then be reflected by the reflective polarizer 120. The light beam reflected by the reflective polarizer 120 is transmitted back and forth between the reflective polarizer 120 and the first curved mirror 130, and may be emitted out of the projection apparatus 100 through the reflective polarizer 120.

Specifically, as shown in FIG. 13 and FIG. 14, the picture generation unit 110 may be located below the reflective polarizer 120, the first curved mirror 130 is located between the reflective polarizer 120 and the picture generation unit 110, and the first polarization converter 140 is located between the reflective polarizer 120 and the first curved mirror 130. With reference to a corresponding direction when the vehicle is in a normal traveling state, the projection apparatus 100 is integrally located in the center console, and the center console is located below the windshield. The below in FIG. 13 is a Y direction, and corresponds to the below in a vehicle traveling state. A right side in FIG. 13 is an X direction, and corresponds to a rear side in the vehicle traveling state. As shown in FIG. 13, the picture generation unit 110 is located in the Y direction of the reflective polarizer 120, and the picture generation unit 110 emits an incident light beam 111 toward the reflective polarizer 120. The incident light beam 111 is a light beam that is emitted by the picture generation unit 110 and that is in contact with the reflective polarizer 120 for the first time.

In this implementation, as shown in FIG. 13 and FIG. 14, the incident light beam 111 emitted by the picture generation unit 110 is S-linearly polarized light. In FIG. 14, a bidirectional arrow tilting from the upper right to the lower left indicates the S-linearly polarized light. The S-linearly polarized light may be transmitted through the first curved mirror 130, and the transmitted incident light beam 111 maintains the S-linearly polarized light and is transmitted through the first polarization converter 140. The first polarization converter 140 converts the incident light beam 111 into left-handed circularly polarized light, and in FIG. 14, an arc-shaped arrow in a counterclockwise direction indicates the left-handed circularly polarized light. In this implementation, the second-state circularly polarized light may be left-handed circularly polarized light, and the incident light beam 111 is reflected by the reflective polarizer 120 after being incident to the reflective polarizer 120, to form the first retro-reflected light beam 112.

In this implementation, the first curved mirror 130 includes a first curved transflective mirror 132. In this embodiment, the free-form transflective mirror is used as an example. The curved mirror has polarization-based selective transmission, and can transmit second-state linearly polarized light and reflect first-state linearly polarized light. In addition, the first curved transflective mirror 132 is in a free-form surface shape on a reflective surface, to correct an aberration caused by an irregular curved surface of the windshield after reflecting a light beam.

In this implementation, the first-state circularly polarized light may be right-handed circularly polarized light, the second-state circularly polarized light may be left-handed circularly polarized light, and the first retro-reflected light beam 112 reflected by the reflective polarizer 120 is converted into right-handed circularly polarized light. In FIG. 14, an arc-shaped arrow in a clockwise direction indicates the right-handed circularly polarized light, and the right-handed circularly polarized light is converted into P-linearly polarized light after being transmitted through the first polarization converter 140. In FIG. 14, a bi-directional arrow tilting from the upper left to the lower right indicates the P-linearly polarized light. The first retro-reflected light beam 112 in a P-linear polarization state is reflected by the first curved transflective mirror 132, and a reflected light beam is the second retro-reflected light beam 113. The second retro-reflected light beam 113 is transmitted through the first polarization converter 140 and is converted into right-handed circularly polarized light. The first-state circularly polarized light in this implementation may be right-handed circularly polarized light. The second retro-reflected light beam 113 may be transmitted through the reflective polarizer 120 and be emitted out of the projection apparatus 100, and is imaged in the eyes of the driver after being reflected by the windshield 200.

It may be understood that the second-state circularly polarized light in this implementation may alternatively be left-handed circularly polarized light, the first-state circularly polarized light may alternatively be right-handed circularly polarized light, and the incident light beam 111 emitted by the picture generation unit 110 may be in a P-linear polarization state. The incident light beam 111 may be transmitted through the first curved transflective mirror 132, transmitted through the first polarization converter 140 in a P-linear polarization state, and be converted into right-handed circularly polarized light. In this implementation, the reflective polarizer 120 may transmit the left-handed circularly polarized light, and may reflect the right-handed circularly polarized light. The incident light beam 111 in a right-handed circular polarization state is reflected by the reflective polarizer 120 to form the first retro-reflected light beam 112.

The first retro-reflected light beam 112 reflected by the reflective polarizer 120 is in a left-handed circular polarization state, and the first retro-reflected light beam 112 in the left-handed circular polarization state is converted into S-linearly polarized light after being transmitted through the first polarization converter 140. The S-linearly polarized light is reflected by the first curved transflective mirror 132 into the second retro-reflected light beam 113, the second retro-reflected light beam 113 is converted into left-handed circularly polarized light through the first polarization converter 140, and the left-handed circularly polarized light may be transmitted through the reflective polarizer 120, be emitted out of the projection apparatus 100, and imaged in the eyes of the driver after being reflected by the windshield 200.

In this implementation, the reflective polarizer 120 may be a reflective polarizing film having a polarization characteristic, and may use two materials with different refractive indexes to form a multi-layer film, for example, a dual brightness enhancement film (Dual Brightness Enhancement Film, DBEF). The multi-layer film may be specifically a reflective polarizing brightness enhancement film, and includes a plurality of layers, for example, a diffusion layer, a plurality of layers of reflective polarizing films, and a diffusion layer that are sequentially stacked. Specifically, the reflective polarizing film may be separately attached to a substrate layer, and the substrate layer may be a polycarbonate (Polycarbonate, PC) or glass substrate. Corresponding parameters such as a size of the first polarization converter 140 and a spacing between the reflective polarizing film and the first polarization converter 140 may be designed based on an optical system architecture of the projection apparatus 100, to ensure that all light beams pass through different apertures. This ensures that the entire size of the first polarization converter 140 is effectively utilized. In addition, a spacing between the reflective polarizer 120 and the first curved reflector 131 is also designed based on the optical system architecture of the projection apparatus 100.

The first polarization converter 140 may be a quarter wave plate (Quarter Wave Plate, QWP), or may be a half wave plate (Half Wave Plate, HWP). The wave plate is a parallel planar sheet made of a crystal, may be a wafer cut in a direction parallel to an optical axis of a birefringent crystal such as a crystal or calcite, or is made of a material such as a mica disc, cellophane, or polyvinyl alcohol that has a propagation direction for incident light. Specifically, the wave plate may be attached to a reflection surface of the first curved reflector 131, or may be separately attached to a polycarbonate (Polycarbonate, PC) or glass substrate.

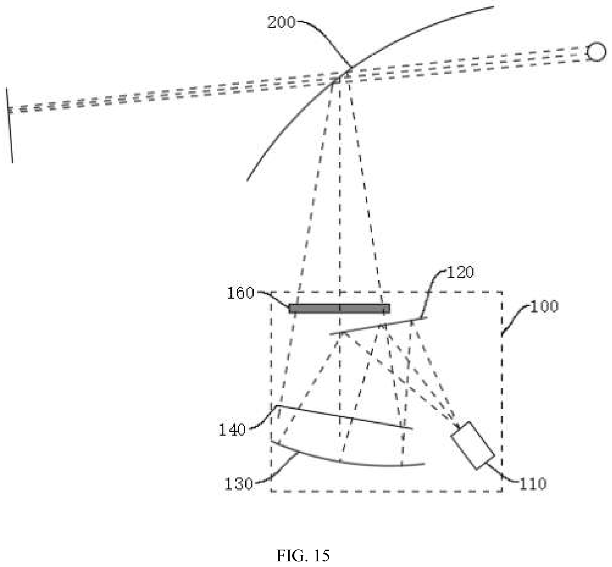

In a possible implementation, as shown in FIG. 15, the projection apparatus 100 in this implementation further includes a lens element 160. The lens element 160 is located at a light beam emergent end of the projection apparatus 100. A light beam output by the projection apparatus 100 is transmitted through the lens element 160 to be emitted out of the projection apparatus.

Specifically, the lens element 160 may be disposed on a back-end light beam that is of a retro-reflected light beam and that is reflected or transmitted through the reflective polarizer 120. After optical coefficient adjustment is performed on a light beam via the reflective polarizer 120, the first curved mirror 130, and the first polarization converter 140 (which may further include the second polarization converter 150), the light beam is emitted to the windshield 200 through the lens element 160.

For example, as shown in FIG. 15, the lens element 160 may be disposed between the reflective polarizer 120 and the windshield 200, and all light beams reflected by the first curved mirror 130 may be transmitted through the lens element 160.

The lens element 160 may perform optical adjustment on a light beam emitted by the projection apparatus 100, to improve optical quality of an entire architecture of the projection apparatus 100, and reduce difficulty in designing and processing a free-form surface in the first curved mirror 130. In addition, in a production process of the existing projection apparatus 100, each module is produced in a standardized manner, and processing parameters of the lens element may be designed to meet different optical requirements of different vehicle models, and the like, so as to meet a plurality of performances of the projection apparatus 100. This reduces overall development difficulty and costs of the projection apparatus 100.

Specifically, the lens element 160 may be made of a material such as resin, glass, or a micro-nano structure. In terms of a shape, according to an optical requirement of the projection apparatus 100, an outline of the lens element 160 may be a Fennier lens, an aspheric lens, a diffraction grating lens, or the like.

It may be understood that the lens element 160 in this implementation is applicable to the projection apparatus in any one of the foregoing implementations.

An optical design in the projection apparatus 100 is determined or optimized based on a performance indicator, material selection, testability acceptance, tolerance control, processing and assembly, costs, and the like. These factors need to be considered throughout a process from a start of a product design to an end of product generation, and a device commissioning process in product application. In the entire process, especially for a head-up display apparatus, a design parameter of a free-form mirror has a large impact on imaging quality of an entire product, and a parameter design and product production of the free-form mirror have a high requirement on a process. According to this embodiment of this application, in a case of a same indicator achieved by the free-form surface, adding the lens element 160 means to increase an optimization dimension of the optical design. Imaging of the projection apparatus can be optimized by adjusting a parameter design of the lens element 160, and a requirement on the indicator of the free-form surface is reduced. In addition, changing the lens element 160 can meet a specific performance indicator requirement of the projection apparatus, so that the free-form surface does not need to be changed, and difficulty and complexity of optical system optimization are reduced.

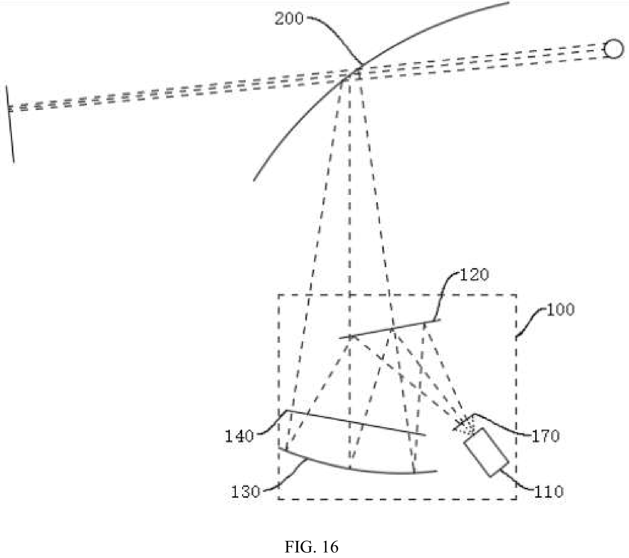

In a possible implementation, as shown in FIG. 16, the projection apparatus 100 further includes a diffuser 170, and the diffuser 170 is located on a light emitting side of the picture generation unit 110. A light beam emitted by the picture generation unit 110 to the reflective polarizer 120 is transmitted through the diffuser 170.

The diffuser 170 may implement a projection image plane of the picture generation unit 110 and an imaging object plane of the projection apparatus 100. A surface of the diffuser 170 is of a micro-nano structure, and a substrate material is glass, resin, or glass substrate resin. The diffuser 170 may be an independent element of a microlens array (Microlens Array, MLA) or a diffractive optical element (Diffractive Optical Element, DOE), or may be a device through which Fresnel elements are easily combined, and may be processed through nanoimprint lithography, etching, or injection molding.

The diffuser 170 is a physical screen, and can receive a real image of the picture generation unit 110, and perform light homogenizing and optical extension angle control on the image, to provide a display object surface for a polarization and folding component in the projection apparatus 100.

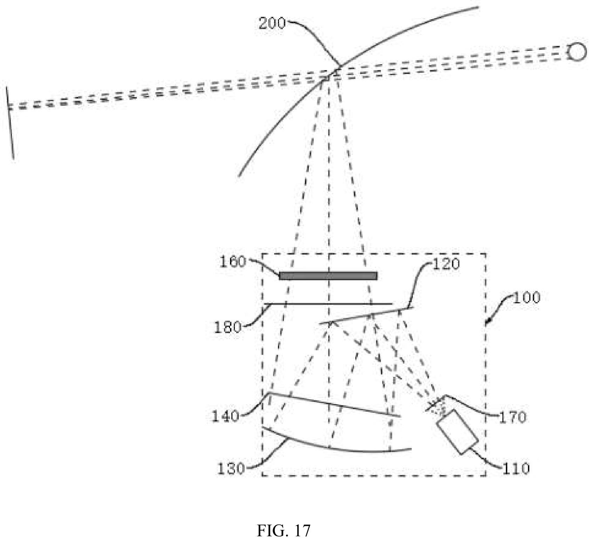

In a possible implementation, as shown in FIG. 17, the projection apparatus 100 further includes an anti-glare film 180. The reflective polarizer 120, the first curved mirror 130, and the first polarization converter 140 form an optical path module. The anti-glare film 180 is located on a light emitting side of the optical path module. Specifically, as shown in FIG. 17, the anti-glare film 180 may be located above the reflective polarizer 120, and located between the reflective polarizer 120 and the lens element 160. A light beam emitted by the optical path module is emitted out of the projection apparatus 100 after being transmitted through the anti-glare film 180.

The anti-glare film 180 can change a symmetry center of light reflection. When external sunlight enters the projection apparatus 100 through the windshield 200, light reflected by the anti-glare film 180 deviates from a visible range of eyes of a driver, for example, deviates from the eyes of the driver to the top, and does not enter the eyes of the driver, to avoid dizziness of the driver.

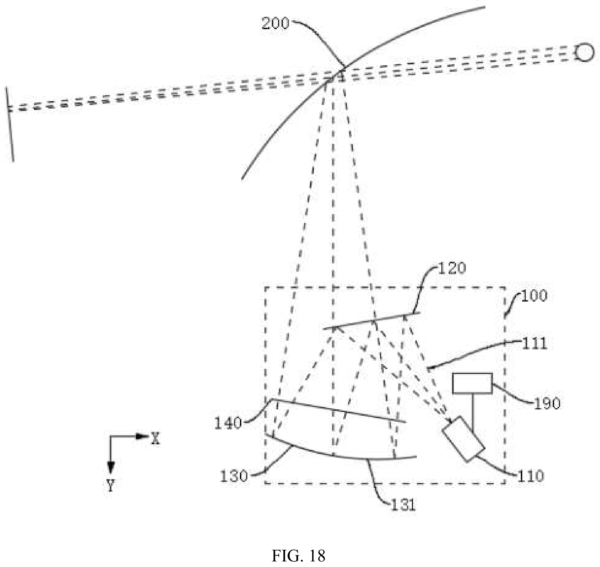

In a possible implementation, FIG. 18 is a diagram of structural composition of the projection apparatus 100.

The projection apparatus 100 includes apparatuses such as the picture generation unit 110, the reflective polarizer 120, the first curved mirror 130, and the first polarization converter 140, or further includes elements such as the second polarization converter 150, the lens element 160, the diffuser 170, or the anti-glare film 180. In this implementation, the projection apparatus 100 further includes a processor 190. The processor 190 can generate a virtual image, and the projection apparatus 100 can emit a light beam of the virtual image.

Specifically, an obtaining apparatus obtains environment information. For example, a radar system obtains information such as a traveling environment of a vehicle ahead and a road ahead, including information such as lane information, a distance to the vehicle ahead, and a speed of the vehicle ahead. The environment information is transmitted to the processor 190, and the processor 190 processes the environment information. In addition, the processor 190 obtains related digital information of a traveling vehicle, for example, a vehicle speed, navigation, a vehicle gear, cruise control, a rotation speed, a state of charge, an endurance range, an audio-visual entertainment system, and the like. The digital information is combined with the obtained environmental information, and corresponding environmental information is combined with corresponding digital information. For example, as shown FIG. 5, the distance to the vehicle ahead is displayed on a rear side of the vehicle ahead, and a virtual image of navigation information is displayed on a road surface (for example, a left-turn prompt arrow is displayed, and a virtual arrow coincides with a displayed lane). After combining the environment information with the digital information, the processor 190 generates a light beam corresponding to the virtual image. After being imaged through apparatuses such as the picture generation unit 110, the reflective polarizer 120, the first curved mirror 130, and the first polarization converter 140, the light beam is reflected by the windshield 200 to the eyes of the driver for being imaged.

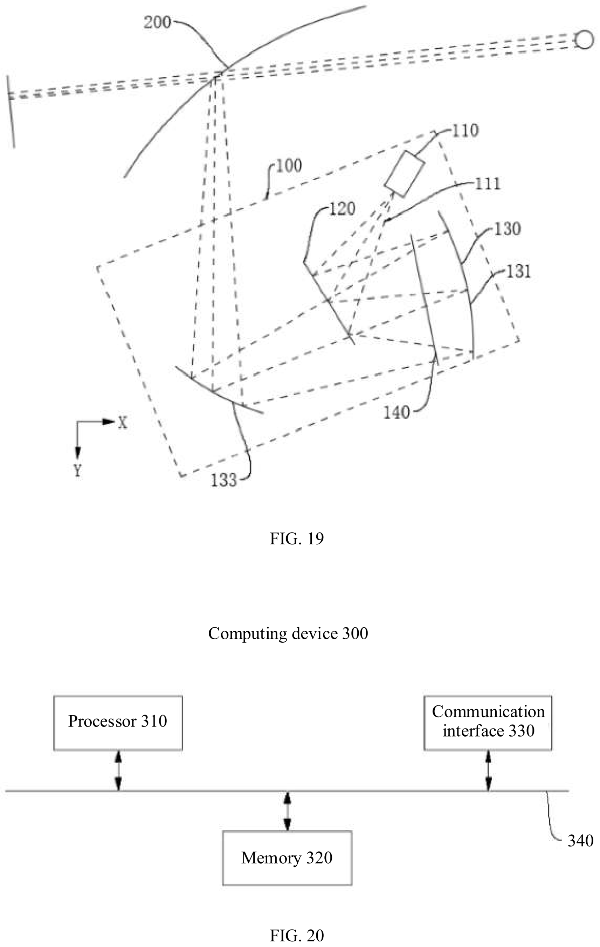

In a possible implementation, a plurality of curved mirrors may be disposed in the projection apparatus 100 in this implementation. As shown in FIG. 19, in addition to the first curved mirror 130, the projection apparatus 100 may further include a second curved mirror 133, and may further include another curved mirror. The reflective polarizer and the polarization converter described in embodiments of this application may be disposed between the picture generation unit 110 and the first curved mirror 130.

This application further provides a specific implementation of a display device. The display device includes an imaging screen and the projection apparatus according to any one of the foregoing implementations. A light beam emitted by the projection apparatus is refracted and/or reflected by the imaging screen for imaging.

The display device may be a projection apparatus like a projector. A display may be a display screen, and a light beam emitted by the projection apparatus 100 is directly projected onto the display for imaging.

Alternatively, the display device may be a head-mounted display device, for example, holographic glasses and/or a helmet, and can project a virtual image to the front of a person, to form a virtual augmented reality image. For example, the display device may be used in augmented reality glasses and an augmented reality helmet, and may also be used in virtual reality (Virtual Reality, VR) glasses and a virtual reality helmet. A working principle of the display device is similar to a head-up display principle of the vehicle, and a difference lies in a design of an optical distance optical parameter.

An embodiment of this application further provides a specific implementation of a transportation means. The transportation means in this embodiment of this application may include a road transportation means, a water transportation means, an air transportation means, an industrial device, an agricultural device, an entertainment device, or the like. For example, the transportation means may be a vehicle. The vehicle is a vehicle in a broad sense, and may be a transportation means (like a commercial vehicle, a passenger vehicle, a motorcycle, a flight vehicle, or a train), an industrial vehicle (like a pallet truck, a trailer, or a tractor), an engineering vehicle (like an excavator, a bulldozer, or a crane), an agricultural device (like a lawn mower or a harvester), an entertainment device, or a toy vehicle. A type of the vehicle is not specifically limited in embodiments of this application. For another example, the transportation means may be a transportation means like an airplane or a ship.

In addition to common components such as an engine or a motor, a wheel, a steering wheel, and a transmission, the transportation means further includes any one of the foregoing embodiments of the projection apparatus 100, or includes the display device in the foregoing implementations. In addition, the transportation means further includes a projection medium. The projection medium may be the windshield 200, and is configured to: receive light emitted by the projection apparatus 100 and perform imaging. In this implementation, the projection apparatus 100 projects an image. After being refracted and/or reflected by the projection medium such as the windshield 200, the image finally enters the eyes of the driver, so that the driver can see a virtual image with a specific depth of field outside the vehicle while looking out of the vehicle through the front windshield.

An embodiment of this application further provides a projection method, applied to the projection apparatus in any one of the foregoing implementations. The projection apparatus includes the picture generation unit 110, the reflective polarizer 120, the first curved mirror 130, and the first polarization converter 140. The following describes in detail specific steps of the projection method in this embodiment of this application.

Step S100: The picture generation unit emits a polarized light beam. Specifically, the picture generation unit may emit the polarized light beam through a polarization mechanism like a polarizing film.

Step S200: The polarized light beam is propagated to the first polarization converter via the reflective polarizer, transmitted through the first polarization converter for propagation to the first curved mirror, propagated to the first polarization converter via the first curved mirror, transmitted through the first polarization converter for propagation to the reflective polarizer, and projected out of the projection apparatus through the reflective polarizer.

The polarized light emitted by the picture generation unit is emitted toward the reflective polarizer 120, a polarization direction of the reflective polarizer 120 is different from a polarization direction of the polarized light emitted by the picture generation unit, and the reflective polarizer 120 reflects the light beam. The light beam is transmitted back and forth between the reflective polarizer 120 and the first curved mirror 130. The first curved mirror 130 can reflect the polarized light and change a form of circularly polarized light, and change a polarization form in combination with the first polarization converter 140. In this way, the light beam that is transmitted back and forth can be transmitted when being transmitted to the reflective polarizer 120 again, and is finally reflected by the windshield to the eyes of the driver for imaging.

Alternatively, the polarized light emitted by the picture generation unit is emitted toward the reflective polarizer 120, a polarization direction of the reflective polarizer 120 is the same as a polarization direction of the polarized light emitted by the picture generation unit, and the light beam is transmitted through the reflective polarizer 120. The transmitted light beam is transmitted back and forth between the reflective polarizer 120 and the first curved mirror 130. The first curved mirror 130 can reflect the polarized light and change a form of circularly polarized light, and change a polarization form in combination with the first polarization converter 140. In this way, the light beam that is transmitted back and forth can be reflected when being transmitted to the reflective polarizer 120 again, and is finally reflected by the windshield to the eyes of the driver for imaging.

An embodiment of this application further provides a computing device. FIG. 20 is a diagram of a structure of a computing device 300 according to the embodiment of this application. The computing device 300 includes a processor 310, a memory 320, a communication interface 330, and a bus 340.

It should be understood that the communication interface 330 in the computing device 300 shown in FIG. 20 may be used for communication with another device.

The processor 310 may be connected to the memory 320. The memory 320 may be configured to store program code and data. Therefore, the memory 320 may be a storage unit in the processor 310, an external storage unit independent of the processor 310, or a component including the storage unit in the processor 310 and the external storage unit independent of the processor 310.

Optionally, the computing device 300 may further include a bus 340. The memory 320 and the communication interface 330 may be connected to the processor 310 through the bus 340. The bus 340 may be a peripheral component interconnect (Peripheral Component Interconnect, PCI) bus, an extended industry standard architecture (Extended Industry Standard Architecture, EISA) bus, or the like. The bus 340 may be classified into an address bus, a data bus, a control bus, and the like. For ease of representation, only one line is used in FIG. 20 for representation, but it does not mean that there is only one bus or one type of bus.

It should be understood that in this embodiment of this application, the processor 310 may be a central processing unit (Central Processing Unit, CPU). The processor may alternatively be a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like. Alternatively, the processor 310 uses one or more integrated circuits, and is configured to execute a related program, to implement the technical solutions provided in this embodiment of this application.

The memory 320 may include a read-only memory and a random access memory, and provide instructions and data to the processor 310. A part of the processor 310 may further include a non-volatile random access memory. For example, the processor 310 may further store information of a device type.

When the computing device 300 runs, the processor 310 executes computer-executable instructions in the memory 320 to perform the operation steps of the foregoing method.

It should be understood that the computing device 300 according to this embodiment of this application may correspond to a corresponding execution body of the methods according to embodiments of this application, and the foregoing and other operations and/or functions of modules in the computing device 300 are separately intended to implement corresponding procedures of the methods according to the embodiments. For brevity, details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

An embodiment of this application further provides a computer-readable storage medium. The computer-readable storage medium stores a computer program, and when the program is executed by a processor, the program is used to perform a diversity problem generation method. The method includes at least one of the solutions described in the foregoing embodiments.

The computer storage medium in embodiments of this application may use any combination of one or more computer-readable media. The computer-readable medium may be a computer-readable signal medium or a computer-readable storage medium. The computer-readable storage medium may be, for example, but is not limited to, an electrical, magnetic, optical, electromagnetic, infrared, or semiconductor system, apparatus, or component, or any combination thereof. A more specific example (a non-exhaustive list) of the computer-readable storage medium includes: an electrical connection with one or more wires, a portable computer disk, a hard disk, a RAM, a ROM, an erasable programmable read-only memory, an optical fiber, a portable compact disc read-only memory (Compact Disc Read-Only Memory, CD-ROM), an optical storage device, a magnetic storage device, or any suitable combination thereof. In this document, the computer-readable storage medium may be any tangible medium that includes or stores a program, and the program may be used by or in combination with an instruction execution system, apparatus, or component.

It should be noted that the foregoing are merely example embodiments and applied technical principles of this application. A person skilled in the art will understand that the present invention is not limited to specific embodiments described herein, and a person skilled in the art may make various obvious changes, adjustments, and substitutions without departing from a protection scope of the present invention. Therefore, although this application is described in detail by using foregoing embodiments, the present invention is not merely limited to the foregoing embodiments, and may further include more other equivalent embodiments without departing from the concept of the present invention, which all fall within the protection scope of the present invention.

## Claims

1. A projection apparatus, comprising a picture generation unit, a reflective polarizer, a first curved mirror, and a first polarization converter, wherein the picture generation unit is configured to emit a polarized light beam;
the first polarization converter is located between the reflective polarizer and the first curved mirror, and is configured to: transmit the polarized light beam and change a polarization state of the polarized light beam;
the first curved mirror is configured to reflect the polarized light beam; and
after being emitted by the picture generation unit, the polarized light beam is propagated to the first polarization converter via the reflective polarizer, transmitted through the first polarization converter for propagation to the first curved mirror, propagated to the first polarization converter via the first curved mirror, and transmitted through the first polarization converter for propagation to the reflective polarizer.

2. The projection apparatus according to claim 1, wherein the reflective polarizer is configured to: transmit a polarized light beam whose polarization state is a first state and reflect a polarized light beam whose polarization state is a second state; and
the polarization state comprises linearly polarized light and circularly polarized light, the polarized light beam in the first state comprises first-state linearly polarized light and first-state circularly polarized light, and the polarized light beam in the second state comprises second-state linearly polarized light and second-state circularly polarized light.

3. The projection apparatus according to claim 1 or 2, wherein the first curved mirror comprises a first curved reflector, the picture generation unit is located on a side that is of the reflective polarizer and that is close to the first curved reflector, and the picture generation unit emits a polarized light beam, wherein a polarization state of the polarized light beam is the second-state linearly polarized light; and
the polarized light beam is reflected by the reflective polarizer and is propagated to the first polarization converter, the polarized light beam is transmitted through the first polarization converter to convert the polarization state of the polarized light beam into the second-state circularly polarized light and is transmitted through the first polarization converter for propagation to the first curved reflector, the polarized light beam is reflected by the first curved reflector to convert the polarization state of the polarized light beam into the first-state circularly polarized light and is propagated to the first polarization converter, and the polarized light beam is transmitted through the first polarization converter to convert the polarization state of the polarized light beam into the first-state linearly polarized light, is transmitted through the first polarization converter for propagation to the reflective polarizer, and is transmitted through the reflective polarizer.

4. The projection apparatus according to any one of claims 1 to 3, wherein the first polarization converter comprises a quarter wave plate.

5. The projection apparatus according to claim 1 or 2, wherein the first curved mirror comprises a first curved reflector, the picture generation unit is located on a side that is of the reflective polarizer and that is close to the first curved reflector, and the picture generation unit emits a polarized light beam, wherein a polarization state of the polarized light beam is the second-state linearly polarized light; and
the polarized light beam is transmitted through the first polarization converter to convert the polarization state of the polarized light beam into the second-state circularly polarized light, is reflected by the reflective polarizer to convert the polarization state of the polarized light beam into the first-state circularly polarized light, and is propagated to the first polarization converter, the polarized light beam is transmitted through the first polarization converter to convert the polarization state of the polarized light beam into the first-state linearly polarized light and is propagated to the first curved reflector, the polarized light beam is reflected by the first curved reflector, the polarized light beam that is reflected by the first curved reflector is propagated to the first polarization converter, and the polarized light beam is transmitted through the first polarization converter to convert the polarization state of the polarized light beam into the first-state circularly polarized light, is transmitted through the first polarization converter for propagation to the reflective polarizer, and is transmitted through the reflective polarizer.

6. The projection apparatus according to claim 1 or 2, wherein the first curved mirror comprises a free-form transflective mirror, the picture generation unit is located on a side that is of the free-form transflective mirror and that is away from the reflective polarizer, and the picture generation unit emits a polarized light beam, wherein a polarization state of the polarized light beam is the second-state linearly polarized light; and
the polarized light beam is transmitted through the free-form transflective mirror, the polarized light beam that is transmitted through the free-form transflective mirror is transmitted through the first polarization converter to convert the polarization state of the polarized light beam into the second-state circularly polarized light, is reflected by the reflective polarizer to convert the polarization state of the polarized light beam into the first-state circularly polarized light, and is propagated to the first polarization converter, the polarized light beam is transmitted through the first polarization converter to convert the polarization state of the polarized light beam into the first-state linearly polarized light and is propagated to the free-form transflective mirror, the polarized light beam is reflected by the free-form transflective mirror, the polarized light beam that is reflected by the free-form transflective mirror is propagated to the first polarization converter, and the polarized light beam is transmitted through the first polarization converter to convert the polarization state of the polarized light beam into the first-state circularly polarized light, is transmitted through the first polarization converter for propagation to the reflective polarizer, and is transmitted through the reflective polarizer.

7. The projection apparatus according to claim 1 or 2, wherein the first curved mirror comprises a first curved reflector, the picture generation unit is located on a side that is of the reflective polarizer and that is away from the first curved reflector, and the picture generation unit emits a polarized light beam, wherein a polarization state of the polarized light beam is the second-state linearly polarized light; and
the polarized light beam is transmitted through the reflective polarizer, the polarized light beam that is transmitted through the reflective polarizer is propagated to the first polarization converter, the polarized light beam is transmitted through the first polarization converter to convert the polarization state of the polarized light beam into the second-state circularly polarized light and is transmitted through the first polarization converter for propagation to the first curved reflector, the polarized light beam is reflected by the first curved reflector to convert the polarization state of the polarized light beam into the first-state circularly polarized light and is propagated to the first polarization converter, the polarized light beam is transmitted through the first polarization converter to convert the polarization state of the polarized light beam into the first-state linearly polarized light and is transmitted through the first polarization converter for propagation to the reflective polarizer, and the polarized light beam is reflected out of the projection apparatus through the reflective polarizer.

8. The projection apparatus according to claim 5 or 6, wherein the projection apparatus further comprises a second polarization converter, the second polarization converter is located on a side that is of the reflective polarizer and that is away from the first curved reflector, and the second polarization converter is configured to convert the polarized light beam emitted by the reflective polarizer from the circularly polarized light to the linearly polarized light.

9. The projection apparatus according to claim 8, wherein the second polarization converter comprises a quarter wave plate or a half wave plate.

10. The projection apparatus according to any one of claims 5 to 9, wherein the first polarization converter comprises a quarter wave plate or a half wave plate.

11. The projection apparatus according to any one of claims 1 to 10, wherein the reflective polarizer comprises a polarizing element, and the polarizing element comprises at least one of a liquid crystal polarizer or a reflective polarizing film.

12. The projection apparatus according to claim 11, wherein the reflective polarizer further comprises a substrate layer, and the polarizing element is attached to the substrate layer.

13. The projection apparatus according to any one of claims 1 to 12, wherein the projection apparatus further comprises a lens element, the lens element is located at a light beam emergent end of the projection apparatus, and the lens element is configured to adjust an optical path of an emergent light beam emitted by the projection apparatus.

14. The projection apparatus according to any one of claims 1 to 13, wherein the projection apparatus further comprises a diffuser, the diffuser is located on a light emitting side of the picture generation unit, and the diffuser is configured to implement a projection image plane of the picture generation unit.

15. The projection apparatus according to any one of claims 1 to 14, wherein the projection apparatus further comprises an anti-glare film, and the anti-glare film is configured to process the polarized light beam to mitigate or prevent glare.

16. A display device, comprising an imaging screen and the projection apparatus according to any one of claims 1 to 15, wherein the imaging screen is configured to: receive an emergent light beam emitted by the projection apparatus and perform imaging based on the emergent light beam.

17. The display device according to claim 16, wherein the display device comprises holographic glasses and/or a helmet.

18. A transportation means, comprising the projection apparatus according to any one of claims 1 to 15 or the display device according to claim 16 or 17, wherein the transportation means comprises a projection medium, and the projection medium is configured to: receive an emergent light beam emitted by the projection apparatus and perform imaging based on the emergent light beam.

19. A projection method, applied to a projection apparatus, wherein the projection apparatus comprises a picture generation unit, a reflective polarizer, a first curved mirror, and a first polarization converter, and the method comprises:
emitting, by the first picture generation unit, a polarized light beam; and
propagating the polarized light beam to the first polarization converter via the reflective polarizer, transmitting the polarized light beam through the first polarization converter for propagation to the first curved mirror, propagating the polarized light beam to the first polarization converter via the first curved mirror, transmitting the polarized light beam through the first polarization converter for propagation to the reflective polarizer, and projecting the polarized light beam out of the projection apparatus through the reflective polarizer.
